# EUROPEAN PATENT SPECIFICATION

(11) **EP 3 780 357 B1**
(45) Date of publication and mention of the grant of the patent: **21.10.2026**
(21) Application number: 18914738.2
(22) Date of filing: 12.04.2018
(51) Int. Cl.: H02K 5/173, F16D 1/02, H02K 5/15, H02K 7/00, H02K 1/30, H02K 7/08, H02K 7/116, H02K 21/14

(54) **ROTATING ELECTRIC MACHINE**
ELEKTRISCHE DREHMASCHINE
MACHINE TOURNANTE ÉLECTRIQUE

(43) Date of publication of application: 17.02.2021
(73) Proprietor: NISSAN MOTOR CO., LTD., Yokohama-shi, Kanagawa 221-0023 (JP); Renault s.a.s, 92100 Boulogne Billancourt (FR)
(72) Inventor: KUWAHARA, Takashi, Atsugi-shi, Kanagawa 243-0123 (JP); MIZOKAMI, Ryouichi, Atsugi-shi, Kanagawa 243-0123 (JP); DELEGUE, Jacques, 92100 Boulogne-Billancourt (FR); FOUQUIAU, Alain, 92100 Boulogne-Billancourt (FR)
(74) Representative: Hoefer & Partner Patentanwälte mbB
(86) International application number: PCT/IB2018/000528
(87) International publication number: WO 2019/197856

(56) References cited:
- EP-A1- 1 885 046
- EP-A1- 3 011 816
- WO-A1-2014/010529
- WO-A1-2015/146467
- JP-A- 2002 291 192
- JP-A- 2007 062 477
- JP-A- 2009 154 604
- JP-A- 2014 004 895
- JP-A- 2014 096 964
- JP-A- S6 018 640
- JP-B2- 5 741 826
- JP-U- 3 159 339
- JP-U- S5 977 620

## Description

### TECHNICAL FIELD

The present invention relates to a rotating electric machine.

### BACKGROUND ART

JP 2014-225971 A discloses an electric motor provided with a rotor having a rotor shaft, a stator provided to surround the rotor, and a motor housing for housing the rotor and the stator. The rotor shaft of the electric motor has one end joined to a rotation shaft of a transmission. The transmission is configured to decelerate and transmit the rotational power of the rotor shaft to a drive shaft.
JP 5 741826 B2 describes a magnet holder for a motor which includes a positioning plate having a plurality of projections projecting from faces on radial inner sides of magnets to radial outer sides, and the plurality of magnets are disposed in circumferential positions defined by the plurality of projections.
JP S59 77620 U discloses a shaft on which a male spline is formed.
EP1885046 A1 describes a generator/motor including a ring-shaped stator core fixed to a motor housing, and a motor rotor. The motor rotor includes a ring-shaped rotor yoke which rotates in cooperation with a crankshaft and which is opposed to an inner peripheral surface of a stator core with a predetermined gap therebetween. The motor rotor also includes a rotor flange which fixes and supports the rotor yoke at its outer peripheral surface. The rotor flange is rotatably supported by a support member of the motor housing through a bearing. A cylindrical shaft portion is interposed between the crankshaft and the motor rotor, and the crankshaft is spline coupled to the cylindrical shaft portion.

### SUMMARY OF INVENTION

In the electric motor described above, a ball bearing supporting the one end of the rotor shaft and a ball bearing supporting the other end of the rotor shaft are provided on the motor housing. More specifically, this electric motor is configured so that the rotor shaft is rotatably bearing-supported by each of the one end side ball bearing and the other end side ball bearing disposed apart from each other in the axial direction of the rotor shaft. In the electric motor (rotating electric machine) of such a configuration, the ball bearings are disposed at the one end side and the other end side of the rotor shaft, and therefore the entire configuration of the electric motor becomes complicated and also friction loss by the ball bearings at the one end side and the other end side occurs in motor driving.

It is an object of the present invention to provide a rotating electric machine capable of suppressing the occurrence of friction loss by a simple
configuration.

The present invention is defined by the independent claims. Further embodiments of the invention are defined by the dependent claims.

### BRIEF DESCRIPTION OF DRAWINGS

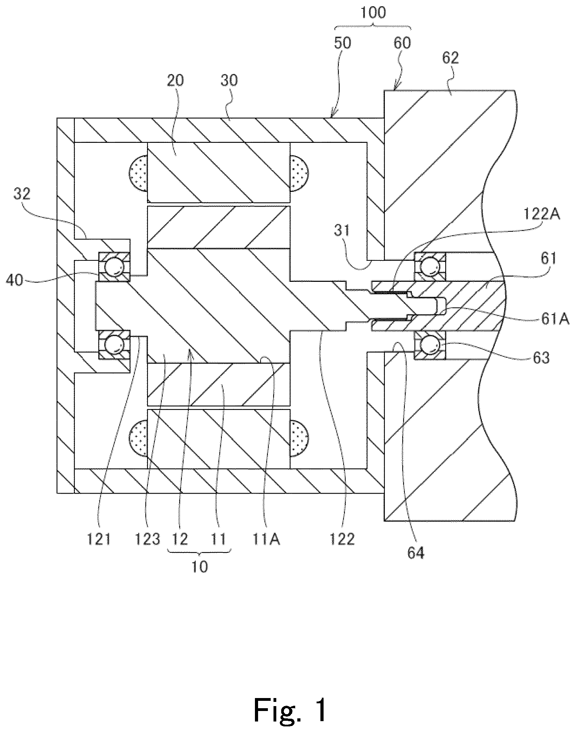

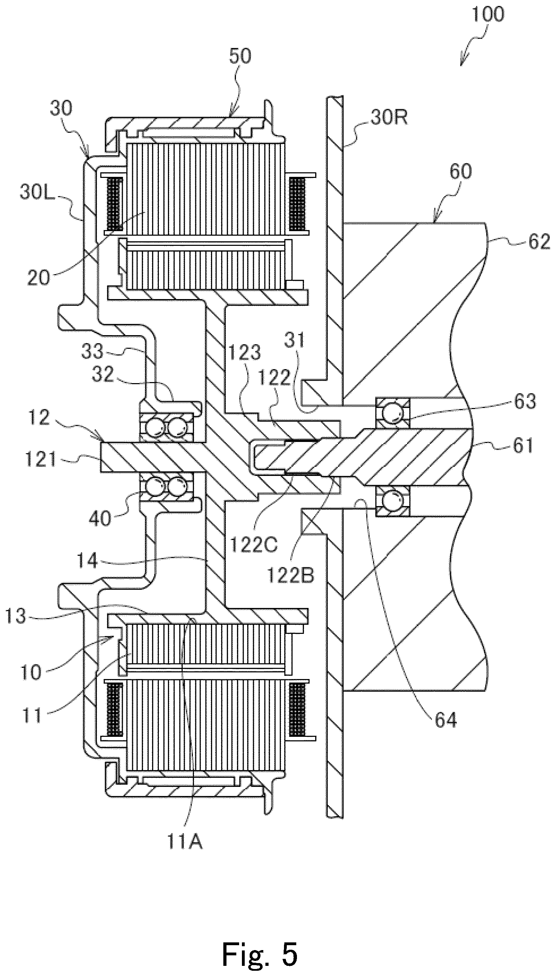

Fig. 5 and the corresponding passages illustrate an embodiment according to the claimed invention. Figs. 1-4 and their corresponding passages illustrate individual aspects of the invention relating in particular to the coupling between the rotor shaft 12 and the power transmission shaft 61; these figures do not, by themselves, illustrate the complete claimed arrangement, in particular the claimed rotor and bearing configuration. The features described in connection with Figs. 1-4 may nevertheless form part of the claimed invention in combination with the arrangement of Fig. 5.
FIG. 1 is a partial longitudinal cross-sectional view of a motor system provided with a transmission and a motor according to a first embodiment.
FIG. 2 is a partial longitudinal cross-sectional view of a motor system provided with a transmission and a motor according to a second embodiment.
FIG. 3 is a partial longitudinal cross-sectional view of a motor system provided with a transmission and a motor according to a third embodiment.
FIG. 4 is a partial longitudinal cross-sectional view of a motor system provided with a transmission and a motor according to a fourth embodiment.
FIG. 5 is a partial longitudinal cross-sectional view of a motor system provided with a transmission and a motor according to a fifth embodiment.

### DESCRIPTION OF EMBODIMENTS

Hereinafter, embodiments of the present invention are described with reference to the drawings. Unless explicitly stated otherwise, the embodiments and technical features described in the following paragraphs form part of the claimed invention.

### <First Embodiment>

FIG. 1 is a partial longitudinal cross-sectional view of a motor system 100 provided with a transmission 60 and a motor 50 according to a first embodiment of the present invention.

As illustrated in FIG. 1, the motor system 100 (rotating electric machine system) is provided with the motor 50 and the transmission 60, and configures a drive device for electric vehicles, for example. The motor system 100 of this embodiment is described as an automobile system but may be used as a drive device of equipment other than vehicles e.g., various kinds of electric equipment or industrial machines.

The motor 50 rotates by receiving the supply of power from a power supply, such as a battery, mounted in a vehicle and functions as a motor driving wheels of the vehicle. The motor 50 also functions as a generator driven by external force to generate electricity. Therefore, the motor 50 is configured as a so-called motor generator (rotating electric machine) functioning as a motor and a generator. In this embodiment, the motor 50 is configured as a motor generator for electric vehicles but may be configured as a motor generator to be used for various kinds of electric equipment or industrial machines.

The motor 50 is provided with a rotor 10, a stator 20 disposed to surround the rotor 10, and a housing 30 housing the rotor 10 and the stator 20.

The rotor 10 is provided with a cylindrical rotor core 11 and a rotor shaft 12 fixed in an insertion hole 11A of the rotor core 11. The rotor 10 is rotatably disposed with respect to the stator 20 inside the stator 20. The rotor shaft 12 is configured as a shaft member projecting from both end surfaces of the rotor core 11 to the outside in the axial direction. One end portion 121 (left end) of the rotor shaft 12 is rotatably supported by a bearing 40 provided on the housing 30 and the other end portion 122 (right end) of the rotor shaft 12 is joined to a rotation shaft 61 of the transmission 60. The rotor shaft 12 and the rotation shaft 61 are disposed so that the rotation centers thereof are located on the same line.

The stator 20 is a cylindrical member formed by laminating a plurality of electromagnetic steel sheets. Around the teeth of the stator 20, U-phase, V-phase, and W-phase coils are wound. The stator 20 is fixed to the housing 30 in a state where the outer peripheral surface thereof contacts the inner peripheral surface of the housing 30.

The housing 30 is a case member housing the rotor 10 and the stator 20. The motor 50 and the transmission 60 are disposed adjacent to each other. The right side surface of the housing 30 is fixed to the left side surface of a transmission case 62 of the transmission 60 by a fastening means, such as a bolt. In the right side surface of the housing 30, a through-hole 31 is formed which allows the other end portion 122 of the rotor shaft 12 to pass through the outside of the housing 30.

The transmission 60 is provided with the rotation shaft 61 and a plurality of gears, which is not illustrated, in the transmission case 62. The transmission 60 is configured as a driving power transmission device changing the speed of the rotational power of the rotor shaft 12 and transmitting the same to a drive shaft. The rotation shaft 61 is rotatably supported by a ball bearing 63 provided on the transmission case 62.

In the left side surface of the transmission case 62, a through-hole 64 is formed which allows a left end portion (tip portion) of the rotation shaft 61 to pass through the outside of the transmission case 62. The through-hole 64 of the transmission case 62 is disposed to communicate with the through-hole 31 of the housing 30.

The motor 50 according to this embodiment has a feature in the support structure of the rotor shaft 12 of the rotor 10. Hereinafter, the support structure of the rotor shaft 12 is described.

As illustrated in FIG. 1, the rotor shaft 12 of the motor 50 is configured of a center portion 123 fixed in the insertion hole 11A of the rotor core 11, the one end portion 121 provided extending from the center portion 123 to the side opposite to the transmission 60 side, and the other end portion 122 provided extending from the center portion 123 to the transmission 60 side. The outer diameters of the one end portion 121 and the other end portion 122 are formed to be smaller than the outer diameter of the center portion 123. The one end portion 121 and the other end portion 122 are shaft members thinner than the center portion 123.

Inside the left side surface of the housing 30, a cylindrical bearing supporting portion 32 supporting the bearing 40 is formed in a projecting manner. The one end portion 121 of the rotor shaft 12 is rotatably supported by the bearing 40 fixed to the inner peripheral surface of the bearing supporting portion 32. The bearing 40 is a single-row ball bearing (deep groove ball bearing), for example. An inner race of the bearing 40 is attached to the outer peripheral surface of the one end portion 121. An outer race of the bearing 40 is attached to the inner peripheral surface of the bearing supporting portion 32. Thus, when viewed in the motor 50 alone, the rotor shaft 12 of the rotor 10 is in a state where only the one end portion 121 is supported by the bearing 40.

The other end portion 122 of the rotor shaft 12 is configured as a shaft member, the diameter of which reduces toward the tip in the stepwise manner. The rotation shaft 61 of the transmission 60 has a shaft hole 61A formed to be recessed in the axial direction in the left end portion. The other end portion 122 of the rotor shaft 12 has a tip part inserted into the shaft hole 61A (spigot hole) formed on the end portion of the rotation shaft 61 and the outer peripheral surface of the other end portion 122 is fitted to the inner peripheral surface of the shaft hole 61A. Thus, the other end portion 122 of the rotor shaft 12 is connected to the rotation shaft 61 with a spigot joint structure fitted to the rotation shaft 61 of the transmission 60. The shaft hole 61A of the rotation shaft 61 is linearly formed on a part configuring the left end portion of the rotation shaft 61 but may be linearly formed from the left tip surface to a center portion or a position closer to a right end portion than the center portion of the rotation shaft 61. Therefore, the other end portion 122 of the rotor shaft 12 may be configured to be spigot connected to the shaft hole 61A of the rotation shaft 61 in the center portion or at the position closer to the right end than the center portion of the rotation shaft 61.

The other end portion 122 of the rotor shaft 12 is provided with a spline portion 122A spline-coupled to the inner peripheral surface of the shaft hole 61A in the outer peripheral surface at a position closer to the center portion 123 than the tip, i.e., a position different from a part (spigot connection part) fitted to the rotation shaft 61. Due to the fact that the rotor shaft 12 and the rotation shaft 61 are spline-coupled to each other via the spline portion 122A, the relative rotation between the rotor shaft 12 and the rotation shaft 61 is regulated.

In this embodiment, the regulation of the relative rotation between the rotor shaft 12 and the rotation shaft 61 is realized with a spline joint structure but in some examples not covered by the claimed invention, it may be realized by joint structures other than the spline joint structure. Examples of the joint structures other than the spline joint structure include a flange joint structure, an Oldham coupling structure, a ROTEX coupling structure, and the like.

The motor 50 (rotating electric machine) according to this embodiment described above can obtain the following operational effects.

The motor 50 according to this embodiment is provided with the rotor 10 and the stator 20 in the housing 30. In the housing 30, the bearing 40 is provided. The one end portion 121 of the rotor shaft 12 is rotatably supported via the bearing 40. The other end portion 122 of the rotor shaft 12 is joined to the rotation shaft 61 (power transmission shaft) of the transmission 60 (power transmission device) with the spigot joint structure fitted to the rotation shaft 61. More specifically, in the motor 50, the other end portion 122 of the rotor shaft 12 is inserted into the shaft hole 61A formed on the end portion of the rotation shaft 61 of the transmission 60 and the outer peripheral surface of the other end portion 122 is fitted to the inner peripheral surface of the shaft hole 61A, whereby the rotor shaft 12 and the rotation shaft 61 are spigot connected to each other.

Thus, the spigot connection of the other end portion 122 of the rotor shaft 12 to the rotation shaft 61 of the transmission 60 eliminates the necessity of providing a bearing for supporting the other end portion 122 of the rotor shaft 12 on the housing 30. In the motor 50, both ends of the rotor shaft 12 can be rotatably supported by the bearing 40 for the one end portion 121 provided on the housing 30 and the rotation shaft 61 of the transmission 60, and therefore a bearing for the other end portion 122 of the rotor shaft 12 can be omitted. As a result, the entire configuration of the motor 50 can be simplified. Furthermore, the bearing for the other end portion 122 is not disposed, and therefore the frictional resistance in the rotation of the rotor shaft 12 can be correspondingly reduced and the manufacturing cost of the motor 50 can also be correspondingly reduced.

Moreover, in the rotor shaft 12 of the motor 50 according to this embodiment, the spline portion 122A spline-coupled to the inner peripheral surface of the shaft hole 61A is formed on the outer peripheral surface of the other end portion 122 at the position different from the part fitted to the rotation shaft 61 of the transmission 60. Thus, a part spigot-connected to the rotation shaft 61 and a part spline-coupled to the rotation shaft 61 are formed on the other end portion 122 of the rotor shaft 12. Therefore, the connection range of the rotor shaft 12 to the rotation shaft 61 expands, so that the other end portion 122 of the rotor shaft 12 can be more stably supported.

Furthermore, in the other end portion 122 of the rotor shaft 12, the part fitted to the shaft hole 61A of the rotation shaft 61 is provided at a position closer to the rotation shaft 61 than the spline portion 122A, e.g., a tip part of the other end portion 122. Thus, in the rotor shaft 12, a part supported by the bearing 40 and a part supported by the rotation shaft 61 can be disposed apart from each other as much as possible. By such a configuration, both the ends of the rotor shaft 12 can be supported in a state where the inclination of the rotor shaft 12 can be further suppressed, so that the rotor shaft 12 can be stably supported.

### <Second Embodiment>

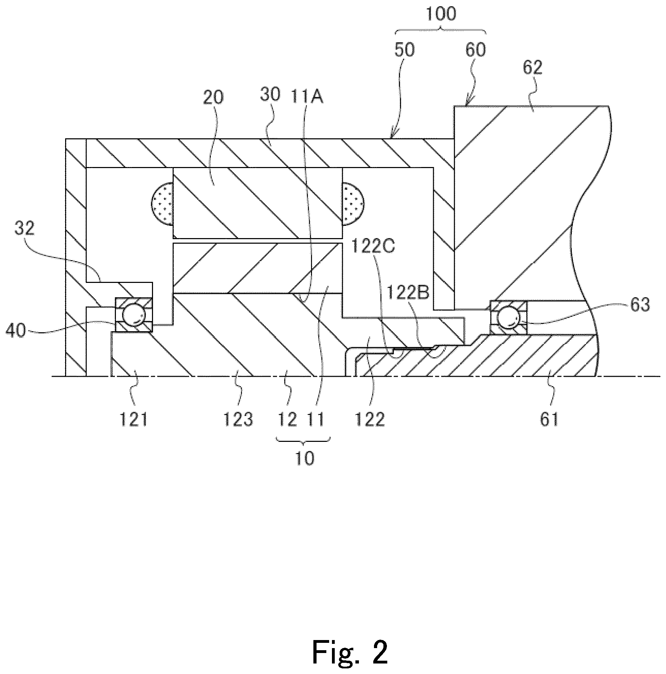

Next, a motor system 100 provided with a transmission 60 and a motor 50 according to a second embodiment is described with reference to FIG. 2. The motor 50 of the second embodiment and the motor of the first embodiment are different in a method of spigot connecting the other end portion 122 of a rotor shaft 12 and a rotation shaft 61 of the transmission 60.

As illustrated in FIG. 2, in the motor 50 according to this embodiment, the other end portion 122 of the rotor shaft 12 is a shaft member formed to have a diameter smaller than that of a center portion 123. A shaft hole 122B recessed in the axial direction is formed on a tip part of the other end portion 122. A left end portion (tip part) of the rotation shaft 61 of the transmission 60 is inserted into the shaft hole 122B (spigot hole) in the other end portion 122 of the rotor shaft 12 and the inner peripheral surface of the shaft hole 122B located closer to the tip surface of the other end portion 122 is fitted to the outer peripheral surface of an end portion of the rotation shaft 61. Thus, the other end portion 122 of the rotor shaft 12 is connected to the rotation shaft 61 with a spigot joint structure fitted to the rotation shaft 61 of the transmission 60.

The shaft hole 122B of the rotor shaft 12 is linearly formed on a part configuring the other end portion 122 but may be linearly formed from the right tip surface to a center portion 123 or a position closer to one end portion 121 than the center portion 123 of the rotor shaft 12. Therefore, the rotor shaft 12 may be configured to be spigot connected to the rotation shaft 61 of the transmission 60 in the center portion 123 or at the position closer to the one end portion 121 than the center portion 123.

The shaft hole 122B formed on the other end portion 122 of the rotor shaft 12 is provided with a spline portion 122C spline-coupled to the outer peripheral surface of the rotation shaft 61 on the inner peripheral surface at a position closer to the center portion 123 than the tip, i.e., a position different from a part (spigot connection part) fitted to the rotation shaft 61. Due to the fact that the rotor shaft 12 and the rotation shaft 61 are spline-coupled to each other via the spline portion 122C, the relative rotation between the rotor shaft 12 and the rotation shaft 61 is regulated.

In this embodiment, the regulation of the relative rotation between the rotor shaft 12 and the rotation shaft 61 is realized with the spline joint structure but in some examples not covered by the claimed invention, it may be realized by joint structures other than the spline joint structure. Examples of the joint structures other than the spline joint structure include a flange joint structure, an Oldham coupling structure, a ROTEX coupling structure, and the like.

According to the motor 50 (rotating electric machine) of this embodiment, the one end portion 121 of the rotor shaft 12 is rotatably supported via the bearing 40 and the other end portion 122 of the rotor shaft 12 is connected to the rotation shaft 61 (power transmission shaft) of the transmission 60 (power transmission device) with the spigot joint structure fitted to the rotation shaft 61. More specifically, the other end portion 122 of the rotor shaft 12 is provided with the shaft hole 122B into which the rotation shaft 61 is inserted and the inner peripheral surface of the shaft hole 122B is fitted to the outer peripheral surface of an end portion the rotation shaft 61, whereby the rotor shaft 12 and the rotation shaft 61 are spigot connected to each other.

Thus, the spigot connection of the other end portion 122 of the rotor shaft 12 to the rotation shaft 61 of the transmission 60 eliminates the necessity of providing a bearing for supporting the other end portion 122 of the rotor shaft 12 on the housing 30, and thus the same operational effects as those of the first embodiment can be obtained.

In the motor according to the first embodiment, the other end portion of the rotor shaft is inserted into the shaft hole of the rotation shaft, and therefore the shaft thickness of the rotor shaft cannot be made larger than that of the rotation shaft. However, in the motor 50 of this embodiment, the shaft hole 122B of the other end portion 122 of the rotor shaft 12 is configured to be externally fitted to an end portion of the rotation shaft 61, and therefore the other end portion 122 can be formed to have an arbitrary thickness regardless of the shaft thickness of the rotation shaft 61. As a result, the connection strength of the other end portion 122 of the rotor shaft 12 and the rotation shaft 61 of the transmission 60 can be increased as necessary. According to the invention, the center portion 123 is thickly formed in the rotor shaft 12, and therefore the other end portion 122 can be easily formed into an arbitrary thickness within the range where the outer diameter thereof is not larger than that of the center portion 123. For example, when the outer diameters of the other end portion 122 and the center portion 123 of the rotor shaft 12 are made equal to each other, only the one end portion 121 may be formed to have a diameter smaller than that of the other portions, so that the manufacturing cost of the rotor shaft 12 can be reduced. On the other hand, when only the end portion of the rotation shaft 61 is thickly formed in the rotation shaft 61 having an almost constant outer diameter in order to increase the connection strength, the manufacturing cost increases. Therefore, the rotor shaft 12 according to this embodiment can increase the connection strength of the rotor shaft 12 and the rotation shaft 61 without causing the increase in the manufacturing cost.

Moreover, in the motor 50 according to this embodiment, the shaft hole 122B of the other end portion 122 of the rotor shaft 12 is provided with the spline portion 122C spline-coupled to the outer peripheral surface of the rotation shaft 61 on the inner peripheral surface at a position different from the part fitted to the rotation shaft 61. Thus, a part spigot-connected to the rotation shaft 61 and a part spline-connected to the rotation shaft 61 are formed in the other end portion 122 of the rotor shaft 12. Therefore, the connection range of the rotor shaft 12 to the rotation shaft 61 expands, so that the other end portion 122 of the rotor shaft 12 can be more stably supported.

Furthermore, in the other end portion 122 of the rotor shaft 12, the part fitted to the rotation shaft 61 is provided at a position closer to the rotation shaft 61 than the spline portion 122C, e.g., in the shaft hole 122B in the tip part of the other end portion 122. Thus, in the rotor shaft 12, a part supported by the bearing 40 and a part supported by the rotation shaft 61 can be disposed apart from each other as much as possible. By such a configuration, both ends of the rotor shaft 12 can be supported in a state where the inclination of the rotor shaft 12 can be further suppressed, so that the rotor shaft 12 can be stably supported.

### <Third Embodiment>

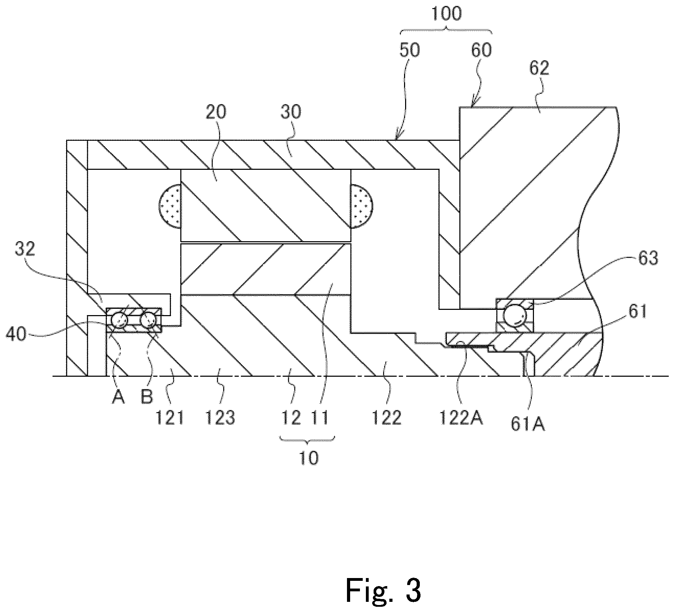

Next, a motor system 100 provided with a transmission 60 and a motor 50 according to a third embodiment is described with reference to FIG. 3. The motor 50 of the third embodiment and the motor of the first embodiment are different in the structure of a bearing 40 supporting one end portion 121 of a rotor shaft 12.

In the motor 50 according to this embodiment, the bearing 40 supporting the one end portion 121 of the rotor shaft 12 is configured not as a single-row ball bearing but as a double-row angular ball bearing. In the double-row angular ball bearing, a plurality of rows (for example, two rows) of rolling elements (balls) provided between an inner race and an outer race is provided in the axial direction of the rotor shaft 12 and straight lines (lines A and B) connecting the junction points between the inner race, the rolling element, and the outer race in respective rows have an inclination to the radial direction of the rotor shaft 12. The line A in the outside row is inclined to the other end portion 122 side from the inner race toward the outer race. The line B in the inside row is inclined to the one end portion 121 side from the inner race toward the outer race.

According to the motor 50 of this embodiment, the bearing 40 supporting the one end portion 121 of the rotor shaft 12 is configured as the double-row angular ball bearing, and therefore, even in a case where force in the axial direction acts on the rotor shaft 12, the double-row angular ball bearing can receive the force. Thus, the rotor shaft 12 can be more stably supported.

Before the assembling of the motor 50 and the transmission 60, the rotor shaft 12 is in a state of being cantilever-supported to the housing 30 via the bearing 40. Unless the one end portion 121 of the rotor shaft 12 is firmly supported by the bearing 40, there is a possibility that the other end portion 122 side of the rotor shaft 12 swings, so that a rotor core 11 attached to the rotor shaft 12 interferes with a stator 20.

However, according to the motor 50 of this embodiment, the bearing 40 is configured as the double-row angular ball bearing, and therefore the one end portion 121 can be firmly supported without causing the swinging of the other end portion 122 of the rotor shaft 12. Therefore, in a state before the rotor shaft 12 is joined to the rotation shaft 61 of the transmission 60, the interference between the rotor core 11 and the stator 20 can be suppressed.

### <Fourth Embodiment>

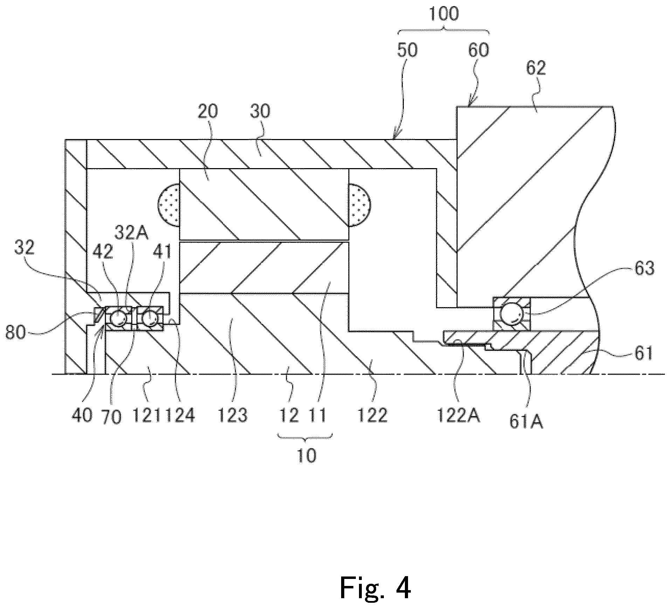

Next, a motor system 100 provided with a transmission 60 and a motor 50 according to a fourth embodiment is described with reference to FIG. 4. The motor 50 of the fourth embodiment and the motor of the first embodiment are different in the configuration of a bearing 40 supporting one end portion 121 of a rotor shaft 12.

As illustrated in FIG. 4, in the motor 50 according to this embodiment, the bearing 40 supporting the one end portion 121 of the rotor shaft 12 is configured of two single-row ball bearings (deep groove ball bearings) 41, 42.

The ball bearings 41, 42 are provided so that their inner races contact the outer peripheral surface of the one end portion 121 of the rotor shaft 12 and are disposed side by side in the axial direction of the rotor shaft 12. On the outer peripheral surface of the rotor shaft 12 between the ball bearings 41, 42, an interval adjusting member 70 for forming a predetermined gap between the ball bearings 41, 42 is provided. The interval adjusting member 70 is disposed to contact the right side surface (inside surface) of the inner race of the ball bearing 42 and the left side surface (outside surface) of the inner race of the ball bearing 41. The right side surface (inside surface) of the inner race of the ball bearing 41 abuts on a step portion 124 formed in the one end portion 121 of the rotor shaft 12.

On the other hand, outer races of the ball bearings 41, 42 are housed in a housing groove 32A formed in the inner peripheral surface of a bearing supporting portion 32 of a housing 30. Between the outer race of the ball bearing 41 and the outer race of the ball bearing 42, a gap corresponding to the width of the interval adjusting member 70 is present. The right side surface (inside surface) of the outer race of the ball bearing 41 abuts on the side surface of the housing groove 32A.

Furthermore, in the housing groove 32A of the bearing supporting portion 32, an annular plate spring 80 for giving a preload to the ball bearings 41, 42 is provided. The plate spring 80 is held between the side surface of the housing groove 32A and the outer race of the ball bearing 42 and biases the left side surface of the outer race of the ball bearing 42 toward the right side in the axial direction of the rotor shaft 12. By the biasing force of this plate spring 80, a preload toward the right direction is given to the outer race of the ball bearing 42. When the outer race of the ball bearing 42 is biased with the plate spring 80, the reaction force from the side surface of the housing groove 32A acts on the outer race of the ball bearing 41, so that a preload toward the left direction is given thereto. Thus, the preload is given to the outer races of the ball bearings 41, 42 using the plate spring 80, whereby an internal gap in the ball bearings 41, 42 can be reduced.

According to the motor 50 of this embodiment, the one end portion 121 of the rotor shaft 12 is supported by the single-row ball bearings 41, 42 arranged side by side in the axial direction of the rotor shaft 12. As described in the third embodiment, before the assembling of the motor 50 and the transmission 60, there is a possibility that the other end portion 122 side of the rotor shaft 12 swings, so that the rotor core 11 and the stator 20 interfere with each other. However, in the motor 50, the ball bearings 41, 42 supporting the one end portion 121 of the rotor shaft 12 are arranged side by side in the axial direction, and therefore the rotor shaft 12 can be firmly supported to suppress the swinging of the other end portion 122 of the rotor shaft 12. Therefore, in a state before the rotor shaft 12 is joined to the rotation shaft 61 of the transmission 60, the interference between the rotor core 11 and the stator 20 can be suppressed.

In this embodiment, the bearing 40 is configured of the two single-row ball bearings 41, 42 arranged side by side in the axial direction but may be configured of three or more single-row ball bearings arranged side by side in the axial direction.

Furthermore, in the motor 50 of this embodiment, the plate spring 80 is provided on the housing 30, and the outer races of the ball bearings 41, 42 are biased in the axial direction of the rotor shaft 12 with the plate spring 80. Thus, the preload is given to the outer races of the ball bearings 41, 42, whereby the internal gap in the ball bearings 41, 42 can be reduced. This enables the suppression of a backlash in the axial direction of the rotor shaft 12.

In this embodiment, the plate spring 80 is configured so that the outer race of the ball bearing 42 is biased but may be configured so that the inner race of the ball bearing 42 is biased. When configured as described above, the interval adjusting member 70 is disposed to be held between the outer race of the ball bearing 41 and the outer race of the ball bearing 42. A member biasing the ball bearing 42 or the like may be an elastic member, such as a coil spring, instead of the plate spring 80.

### <Fifth Embodiment>

Next, a motor system 100 provided with a transmission 60 and a motor 50 according to a fifth embodiment is described with reference to FIG. 5. The motor 50 of the fifth embodiment and the motor of the second embodiment are different in the structure supporting a rotor core 11.

As illustrated in FIG. 5, the motor 50 according to this embodiment has a feature mainly in the structure of a rotor 10. The rotor 10 is configured of the rotor core 11, a rotor shaft 12, a core supporting portion 13, and a connection portion 14.

The core supporting portion 13 of the rotor 10 is a member having a cylindrical shape and supporting the rotor core 11 having a cylindrical shape from the inside. The core supporting portion 13 is formed such that the length in the axial direction is slightly longer than the length in the axial direction of the rotor core 11. The core supporting portion 13 is inserted into an insertion hole 11A of the rotor core 11. The rotor core 11 is fixed onto the core supporting portion 13 in a state of being externally fitted to the outer periphery of the core supporting portion 13.

The rotor shaft 12 is disposed inside the core supporting portion 13. The rotor shaft 12 and the core supporting portion 13 are connected to each other via the connection portion 14. The connection portion 14 is formed as a plate-shaped wall portion projecting in the radial direction of the rotor shaft 12 from the outer peripheral surface of a center portion 123 of the rotor shaft 12 and connects the outer peripheral surface of the center portion 123 of the rotor shaft 12 and the inner peripheral surface of the core supporting portion 13. The plate thickness of the connection portion 14 is set to be smaller than the lengths in the axial direction of the rotor shaft 12 and the core supporting portion 13.

In the rotor shaft 12, one end portion 121 is supported by a bearing 40 and the other end portion 122 is spigot connected to a rotation shaft 61 of the transmission 60 in a state of being circumscribed to an end portion of the rotation shaft 61. To the connection between the rotor shaft 12 and the rotation shaft 61, the technical idea of each embodiment described above is applicable.

In the motor 50 of this embodiment, a housing 30 is formed by a left side housing 30L and a right side housing 30R. A center part 33 of the left side housing 30L is recessed in the axial direction of the rotor shaft 12 to be inserted into the inside of the core supporting portion 13. In the center part 33 of the left side housing 30L, a bearing supporting portion 32 is formed. The bearing 40 is fixed to the bearing supporting portion 32. More specifically, the bearing 40 is provided in the center part 33 of the left side housing 30L to be located inside the rotor core 11 and the core supporting portion 13. The bearing 40 is configured as a double-row angular ball bearing as with the third embodiment. The bearing 40 may be one or more single-row ball bearings (deep groove ball bearing) or the like, instead of the double-row angular ball bearing.

According to the motor 50 of this embodiment described above, the rotor 10 is provided with the core supporting portion 13 that supports the rotor core 11 from the inside and the connection portion 14 which is a plate-shaped member projecting in the radial direction of the rotor shaft 12 from the outer peripheral surface of the rotor shaft 12, and connects the outer peripheral surface of the rotor shaft 12 to the inner peripheral surface of the core supporting portion 13. The left side housing 30L configuring the housing 30 is formed such that the center part 33 (partial) is inserted into the inside of the core supporting portion 13. The bearing 40 is provided in the center part 33 inserted into the inside of the core supporting portion 13.

Thus, in the motor 50, the one end portion 121 of the rotor shaft 12 is supported by the bearing 40 provided in the part inserted into the inside of the core supporting portion 13, and therefore the width in the axial direction of the motor 50 itself can be made smaller than that of the motors of the other embodiments. This enables a size reduction of the motor 50.

As described above, the embodiments of the present invention are described. However, the embodiments merely exemplify some of application examples of the present invention and do not intend to limit the technical scope of the present invention to the specific configurations of the embodiments described above. The above-described embodiments can be variously altered and modified within the scope of matters described in Claims.

The technical idea described in each embodiment may be combined as appropriate in the range where no technical inconsistency occurs, and which is covered by the appended claims.

The rotor core 11, the stator 20, the core supporting portion 13, and the like described in each embodiment described above are cylindrical members but may be tubular-shaped members of polygonal shapes.

Moreover, in each embodiment described above, the motor 50 is assembled to the transmission 60 as a power transmission device but the motor 50 may be assembled to power transmission devices, such as a decelerator. Also in this case, the rotor shaft 12 of the motor 50 and the rotation shaft of the decelerator can be joined to each other by the application of the technical idea in each embodiment.

## Claims

1. A rotating electric machine comprising a rotor (10) and a stator (20) in a housing (30), the rotor (10) having a rotor shaft (12) connected to a power transmission shaft (61) of a power transmission device (60), wherein the power transmission device (60) is configured as a driving power transmission device changing a rotation speed of the rotor shaft (12) and transmitting same to a drive shaft, and the power transmission shaft (61) is rotatably supported by a ball bearing (63) provided on a transmission case (62); wherein:
a bearing (40) is provided on the housing (30),
wherein
the rotor shaft (12) has one end portion (121) supported via the bearing (40) and the rotor shaft (12) is thereby cantilever-supported by the housing (30),
the rotor shaft (12) has another end portion (122) inserted into a shaft hole (61A) formed on an end portion of the power transmission shaft (61),
the another end portion (122) has an outer peripheral surface fitted to an inner peripheral surface of the shaft hole (61A),
a spline portion (122A) spline-coupled to the inner peripheral surface of the shaft hole (61A) is formed on the outer peripheral surface of the another end portion (122) at a position different from a part fitted to the power transmission shaft (61),
the spline portion (122A) is provided at a position closer to a center portion (123) of the rotor shaft (12) than the part fitted to the power transmission shaft (61) in an axial direction of the rotor shaft (12),
the rotor (10) includes:
a tubular-shaped core supporting portion (13) that supports a tubular-shaped rotor core (11) from an inside; and
a connection portion (14) that is a plate-shaped member projecting in a radial direction of the rotor shaft (12) from an outer peripheral surface of a center portion (123) of the rotor shaft (12), and connects the outer peripheral surface of the rotor shaft (12) to an inner peripheral surface of the core supporting portion (13),
the housing (30) is formed such that a part of the housing (30) is inserted into an inside of the core supporting portion (13),
the bearing (40) is provided on a part inserted into the inside of the core supporting portion (13) in the housing (30), and
the center portion (123) of the rotor shaft (12) is made thicker than the one end portion (121).

2. A rotating electric machine comprising a rotor (10) and a stator (20) in a housing (30), the rotor (10) having a rotor shaft (12) connected to a power transmission shaft (61) of a power transmission device (60), wherein the power transmission device (60) is configured as a driving power transmission device changing a rotation speed of the rotor shaft (12) and transmitting same to a drive shaft, and the power transmission shaft (61) is rotatably supported by a ball bearing (63) provided on a transmission case (62); wherein:
a bearing (40) is provided on the housing (30),
the rotor shaft (12) has one end portion (121) supported via the bearing (40) and the rotor shaft (12) is thereby cantilever-supported by the housing (30),
wherein
the rotor shaft (12) has another end portion (122) having a shaft hole (122B) into which an end portion of the power transmission shaft (61) is inserted,
the shaft hole (122B) has an inner peripheral surface fitted to an outer peripheral surface of the end portion of the power transmission shaft (61),
a spline portion (122C) spline-coupled to an outer peripheral surface of the power transmission shaft (61) is formed on the inner peripheral surface of the shaft hole (122B) at a position different from a part fitted to the power transmission shaft (61),
the spline portion (122C) is provided at a position closer to a center portion (123) of the rotor shaft (12) than the part fitted to the power transmission shaft (61) in an axial direction of the rotor shaft (12),
the rotor (10) includes:
a tubular-shaped core supporting portion (13) that supports a tubular-shaped rotor core (11) from an inside; and
a connection portion (14) that is a plate-shaped member projecting in a radial direction of the rotor shaft (12) from an outer peripheral surface of a center portion (123) of the rotor shaft (12), and connects the outer peripheral surface of the rotor shaft (12) to an inner peripheral surface of the core supporting portion (13),
the housing (30) is formed such that a part of the housing (30) is inserted into an inside of the core supporting portion (13),
the bearing (40) is provided on a part inserted into the inside of the core supporting portion (13) in the housing (30), and
the center portion (123) of the rotor shaft (12) is made thicker than the one end portion (121).

3. The rotating electric machine according to claim 1 or 2, wherein
the bearing (40) is configured as a double-row angular ball bearing.

4. The rotating electric machine according to claim 1 or 2, wherein
the bearing (40) is configured of a plurality of single-row ball bearings (41, 42) arranged side by side in an axial direction of the rotor shaft (12).

5. The rotating electric machine according to claim 4, wherein
an inner race or an outer race of the ball bearing (40) is biased in the axial direction of the rotor shaft (12) with a spring (80) provided on the housing (30).

## Patentansprüche

1. Rotierende elektrische Maschine, die einen Rotor (10) und einen Stator (20) in einem Gehäuse (30) umfasst, wobei der Rotor (10) eine Rotorwelle (12) aufweist, die mit einer Kraftübertragungswelle (61) einer Kraftübertragungsvorrichtung (60) verbunden ist, wobei die Kraftübertragungsvorrichtung (60) als eine Antriebskraftübertragungsvorrichtung konfiguriert ist, die eine Drehzahl der Rotorwelle (12) ändert und diese auf eine Antriebswelle überträgt, und die Kraftübertragungswelle (61) durch ein Kugellager (63) drehbar gelagert ist, das an einem Getriebegehäuse (62) vorgesehen ist;
wobei:
ein Lager (40) an dem Gehäuse (30) vorgesehen ist,
wobei
die Rotorwelle (12) einen Endabschnitt (121) aufweist, der über das Lager (40) gelagert ist, und die Rotorwelle (12) dadurch durch das Gehäuse (30) freitragend gelagert ist,
die Rotorwelle (12) einen anderen Endabschnitt (122) aufweist, der in ein Wellenloch (61A) eingesetzt ist, das an einem Endabschnitt der Kraftübertragungswelle (61) ausgebildet ist,
der andere Endabschnitt (122) eine Außenumfangsfläche aufweist, die an eine Innenumfangsfläche des Wellenlochs (61A) angepasst ist,
ein Keilabschnitt (122A), der mit der Innenumfangsfläche des Wellenlochs (61A) keilgekoppelt ist, an der Außenumfangsfläche des anderen Endabschnitts (122) an einer Position ausgebildet ist, die sich von einem Teil unterscheidet, der an die Kraftübertragungswelle (61) angepasst ist,
der Keilabschnitt (122A) an einer Position näher an einem Mittelabschnitt (123) der Rotorwelle (12) als der Teil vorgesehen ist, der an die Kraftübertragungswelle (61) in einer axialen Richtung der Rotorwelle (12) angepasst ist,
der Rotor (10) umfasst:
einen rohrförmigen Kernlagerabschnitt (13), der einen rohrförmigen Rotorkern (11) von einer Innenseite lagert; und
einen Verbindungsabschnitt (14), der ein plattenförmiges Element ist, das in einer radialen Richtung der Rotorwelle (12) von einer Außenumfangsfläche eines Mittelabschnitts (123) der Rotorwelle (12) vorsteht und die Außenumfangsfläche der Rotorwelle (12) mit einer Innenumfangsfläche des Kernlagerabschnitts (13) verbindet,
das Gehäuse (30) derart ausgebildet ist, dass ein Teil des Gehäuses (30) in eine Innenseite des Kernlagerabschnitts (13) eingesetzt ist,
das Lager (40) an einem Teil vorgesehen ist, der in die Innenseite des Kernlagerabschnitts (13) in dem Gehäuse (30) eingesetzt ist, und
der Mittelabschnitt (123) der Rotorwelle (12) dicker als der eine Endabschnitt (121) ausgebildet ist.

2. Rotierende elektrische Maschine, die einen Rotor (10) und einen Stator (20) in einem Gehäuse (30) umfasst, wobei der Rotor (10) eine Rotorwelle (12) aufweist, die mit einer Kraftübertragungswelle (61) einer Kraftübertragungsvorrichtung (60) verbunden ist, wobei die Kraftübertragungsvorrichtung (60) als eine Antriebskraftübertragungsvorrichtung konfiguriert ist, die eine Drehzahl der Rotorwelle (12) ändert und diese auf eine Antriebswelle überträgt, und die Kraftübertragungswelle (61) durch ein Kugellager (63) drehbar gelagert ist, das an einem Getriebegehäuse (62) vorgesehen ist;
wobei:
ein Lager (40) an dem Gehäuse (30) vorgesehen ist,
die Rotorwelle (12) einen Endabschnitt (121) aufweist, der über das Lager (40) gelagert ist, und die Rotorwelle (12) dadurch durch das Gehäuse (30) freitragend gelagert ist,
wobei
die Rotorwelle (12) einen anderen Endabschnitt (122) aufweist, der ein Wellenloch (122B) aufweist, in das ein Endabschnitt der Kraftübertragungswelle (61) eingesetzt ist,
das Wellenloch (122B) eine Innenumfangsfläche aufweist, die an eine Außenumfangsfläche des Endabschnitts der Kraftübertragungswelle (61) angepasst ist,
ein Keilabschnitt (122C), der mit einer Außenumfangsfläche der Kraftübertragungswelle (61) keilgekoppelt ist, an der Innenumfangsfläche des Wellenlochs (122B) an einer Position ausgebildet ist, die sich von einem Teil unterscheidet, der an die Kraftübertragungswelle (61) angepasst ist,
der Keilabschnitt (122C) an einer Position näher an einem Mittelabschnitt (123) der Rotorwelle (12) als der Teil vorgesehen ist, der an die Kraftübertragungswelle (61) in einer axialen Richtung der Rotorwelle (12) angepasst ist,
der Rotor (10) umfasst:
einen rohrförmigen Kernlagerabschnitt (13), der einen rohrförmigen Rotorkern (11) von einer Innenseite lagert; und
einen Verbindungsabschnitt (14), der ein plattenförmiges Element ist, das in einer radialen Richtung der Rotorwelle (12) von einer Außenumfangsfläche eines Mittelabschnitts (123) der Rotorwelle (12) vorsteht und die Außenumfangsfläche der Rotorwelle (12) mit einer Innenumfangsfläche des Kernlagerabschnitts (13) verbindet,
das Gehäuse (30) derart ausgebildet ist, dass ein Teil des Gehäuses (30) in eine Innenseite des Kernlagerabschnitts (13) eingesetzt ist,
das Lager (40) an einem Teil vorgesehen ist, der in die Innenseite des Kernlagerabschnitts (13) in dem Gehäuse (30) eingesetzt ist, und
der Mittelabschnitt (123) der Rotorwelle (12) dicker als der eine Endabschnitt (121) ausgebildet ist.

3. Rotierende elektrische Maschine nach Anspruch 1 oder 2, wobei das Lager (40) als ein zweireihiges Schrägkugellager konfiguriert ist.

4. Rotierende elektrische Maschine nach Anspruch 1 oder 2, wobei
das Lager (40) aus einer Vielzahl von einreihigen Kugellagern (41, 42) konfiguriert ist, die nebeneinander in einer axialen Richtung der Rotorwelle (12) angeordnet sind.

5. Rotierende elektrische Maschine nach Anspruch 4, wobei
ein innerer Laufring oder ein äußerer Laufring des Kugellagers (40) in der axialen Richtung der Rotorwelle (12) mit einer Feder (80) vorgespannt ist, die an dem Gehäuse (30) vorgesehen ist.

## Revendications

1. Machine électrique rotative comprenant un rotor (10) et un stator (20) dans un boîtier (30), le rotor (10) ayant un arbre de rotor (12) relié à un arbre de transmission de puissance (61) d'un dispositif de transmission de puissance (60), dans laquelle le dispositif de transmission de puissance (60) est configuré comme un dispositif de transmission de puissance d'entraînement changeant une vitesse de rotation de l'arbre de rotor (12) et transmettant celle-ci à un arbre d'entraînement, et l'arbre de transmission de puissance (61) est supporté en rotation par un roulement à billes (63) prévu sur un carter de transmission (62) ;
dans laquelle :
un palier (40) est prévu sur le boîtier (30),
dans laquelle
l'arbre de rotor (12) a une partie d'extrémité (121) supportée via le palier (40) et l'arbre de rotor (12) est ainsi supporté en porte-à-faux par le boîtier (30),
l'arbre de rotor (12) a une autre partie d'extrémité (122) insérée dans un trou d'arbre (61A) formé sur une partie d'extrémité de l'arbre de transmission de puissance (61),
l'autre partie d'extrémité (122) a une surface périphérique externe ajustée sur une surface périphérique interne du trou d'arbre (61A),
une partie de cannelure (122A) couplée par cannelure à la surface périphérique interne du trou d'arbre (61A) est formée sur la surface périphérique externe de l'autre partie d'extrémité (122) à une position différente d'une partie ajustée sur l'arbre de transmission de puissance (61),
la partie de cannelure (122A) est prévue à une position plus proche d'une partie centrale (123) de l'arbre de rotor (12) que la partie ajustée sur l'arbre de transmission de puissance (61) dans une direction axiale de l'arbre de rotor (12),
le rotor (10) comprend :
une partie de support de noyau de forme tubulaire (13) qui supporte un noyau de rotor de forme tubulaire (11) depuis un intérieur ; et
une partie de raccordement (14) qui est un élément en forme de plaque faisant saillie dans une direction radiale de l'arbre de rotor (12) depuis une surface périphérique externe d'une partie centrale (123) de l'arbre de rotor (12), et raccorde la surface périphérique externe de l'arbre de rotor (12) à une surface périphérique interne de la partie de support de noyau (13),
le boîtier (30) est formé de sorte qu'une partie du boîtier (30) est insérée dans un intérieur de la partie de support de noyau (13),
le palier (40) est prévu sur une partie insérée dans l'intérieur de la partie de support de noyau (13) dans le boîtier (30), et
la partie centrale (123) de l'arbre de rotor (12) est rendue plus épaisse que la première partie d'extrémité (121).

2. Machine électrique rotative comprenant un rotor (10) et un stator (20) dans un boîtier (30), le rotor (10) ayant un arbre de rotor (12) relié à un arbre de transmission de puissance (61) d'un dispositif de transmission de puissance (60), dans laquelle le dispositif de transmission de puissance (60) est configuré comme un dispositif de transmission de puissance d'entraînement changeant une vitesse de rotation de l'arbre de rotor (12) et transmettant celle-ci à un arbre d'entraînement, et l'arbre de transmission de puissance (61) est supporté en rotation par un roulement à billes (63) prévu sur un carter de transmission (62) ;
dans laquelle :
un palier (40) est prévu sur le boîtier (30),
l'arbre de rotor (12) a une partie d'extrémité (121) supportée via le palier (40) et l'arbre de rotor (12) est ainsi supporté en porte-à-faux par le boîtier (30),
dans laquelle
l'arbre de rotor (12) a une autre partie d'extrémité (122) ayant un trou d'arbre (122B) dans lequel une partie d'extrémité de l'arbre de transmission de puissance (61) est insérée,
le trou d'arbre (122B) a une surface périphérique interne ajustée sur une surface périphérique externe de la partie d'extrémité de l'arbre de transmission de puissance (61),
une partie de cannelure (122C) couplée par cannelure à une surface périphérique externe de l'arbre de transmission de puissance (61) est formée sur la surface périphérique interne du trou d'arbre (122B) à une position différente d'une partie ajustée sur l'arbre de transmission de puissance (61),
la partie de cannelure (122C) est prévue à une position plus proche d'une partie centrale (123) de l'arbre de rotor (12) que la partie ajustée sur l'arbre de transmission de puissance (61) dans une direction axiale de l'arbre de rotor (12),
le rotor (10) comprend :
une partie de support de noyau de forme tubulaire (13) qui supporte un noyau de rotor de forme tubulaire (11) depuis un intérieur ; et
une partie de raccordement (14) qui est un élément en forme de plaque faisant saillie dans une direction radiale de l'arbre de rotor (12) depuis une surface périphérique externe d'une partie centrale (123) de l'arbre de rotor (12), et raccorde la surface périphérique externe de l'arbre de rotor (12) à une surface périphérique interne de la partie de support de noyau (13),
le boîtier (30) est formé de sorte qu'une partie du boîtier (30) est insérée dans un intérieur de la partie de support de noyau (13),
le palier (40) est prévu sur une partie insérée dans l'intérieur de la partie de support de noyau (13) dans le boîtier (30), et
la partie centrale (123) de l'arbre de rotor (12) est rendue plus épaisse que la première partie d'extrémité (121).

3. Machine électrique rotative selon la revendication 1 ou 2, dans laquelle
le palier (40) est configuré comme un roulement à billes angulaire à double rangée.

4. Machine électrique rotative selon la revendication 1 ou 2, dans laquelle
le palier (40) est configuré d'une pluralité de roulements à billes à rangée unique (41, 42) agencés côte à côte dans une direction axiale de l'arbre de rotor (12).

5. Machine électrique rotative selon la revendication 4, dans laquelle
une bague intérieure ou une bague extérieure du roulement à billes (40) est sollicitée dans la direction axiale de l'arbre de rotor (12) avec un ressort (80) prévu sur le boîtier (30).
